# EUROPEAN PATENT SPECIFICATION

(11) **EP 2 762 836 B1**
(45) Date of publication and mention of the grant of the patent: **06.04.2016**
(21) Application number: 13179081.8
(22) Date of filing: 02.08.2013
(51) Int. Cl.: G01C 21/26, G01C 21/36

(54) **Device for switching between a vehicle navigation system and a night vision system as well as a switching method thereof**
Vorrichtung zum Umschalten zwischen einem Fahrzeugnavigationssystem und einem Nachtsichtsystem sowie zugehöriges Schaltverfahren
Dispositif de commutation entre un système de navigation de véhicule et un système de vision nocturne ainsi qu'un procédé de commutation

(30) Priority: 04.02.2013 CN 201310043047
(43) Date of publication of application: 06.08.2014
(73) Proprietor: Shenzhen Protruly Electronics Co., Ltd, Shenzhen 518109 (CN)
(72) Inventor: ZHUANG, Min, 518109 Shenzhen (CN); LU, Peng, 51809 Shenzhen (CN)
(74) Representative: Manitz, Finsterwald & Partner GbR

(56) References cited:
- EP-A1- 2 466 258
- US-A1- 2009 058 684

## Description

### FIELD OF THE INVENTION

The present invention relates to the field of vehicle loaded multimedia technologies and, more particularly, to techniques for switching between a vehicle navigation system and a night vision system as well as switching method thereof. Related technologies are known from EP 2 466 258 A1 and US 2009/058684 A1.

### BACKGROUND

In order to provide convenience to use and improve the driving safety, now vehicles are usually configured with a navigation system for driving route guidance and a night vision system to catch the figures ahead through far infrared thermal imaging in the evening or weak light driving conditions, which provides a better foreseen ability to the drivers. However, in prior art, the navigation system is installed separately from the night vision system, wherein, usually, the navigation system is installed in the control panel of the vehicle while the night vision system is hanging over head. Thus when the driver needs to obtain a clearer road conditions through the night vision system during night driving, the night vision display screen hanging overhead will not be convenient to watch, while when the passengers in the back seat want to check the navigation route, the navigation screen in the control panel is hard for them to watch, and this could affect the driver's driving. Due to the independence and non-compatibility between the navigation system and night vision system, it is inconvenient to use for both drivers and passengers, thus the usage rate is not high at all.

Therefore, the prior art needs to be improved and developed.

### BRIEF SUMMARY OF THE DISCLOSURE

The technical problem to be solved in the present invention is providing a system for switching between a vehicle navigation system and a night vision system as well as the switching methods, aiming at the said defects of the prior art in inconvenient usage due to the incompatibility between the navigation system and the night vision system.

The technical solution adopted in the present invention for solving the technical problems is defined in the independent claims.

The present invention provides a system comprising a vehicle navigation system, a night vision system, a navigation system switching module and a night vision system switching module, as well as switching methods thereof.
Controlling a navigation system starting a navigation mode and displaying the navigation info, or starting a night vision mode, and transmitting the night vision info from the night vision system to the navigation system for displaying, through a navigation system switching module; also, controlling the night vision system starting the night vision mode and displaying the night vision info, or starting the navigation mode, and transmitting the navigation info from the navigation system to the night vision system for displaying, through a night vision system switching module. Therefore, the navigation system is able to display the night vision info, and the night vision system is also able to display the navigation info, which provides convenience to users and improves the driving safety.

### BRIEF DESCRIPTION OF THE DRAWINGS

Figure 1 illustrates a structure schematic diagram on a device for switching between a vehicle navigation system and a night vision system of a preferred embodiment of the present invention.
Figure 2 illustrates a flow chart of a switching method for a navigation system on a device for switching between the vehicle navigation system and the night vision system in the present invention.
Figure 3 illustrates a flow chart of a switching method of a night vision system on a device for switching between a vehicle navigation system and a night vision system in the present invention.

### DETAILED DESCRIPTION

In order to make the purpose, technical solution and the advantages of the present invention clearer and more definite, further detailed descriptions of the present invention are stated here, referencing to the attached drawings and some embodiments of the present invention. It should be understood that the detailed embodiments of the invention described here are used to explain the present invention only, instead of limiting the present invention.

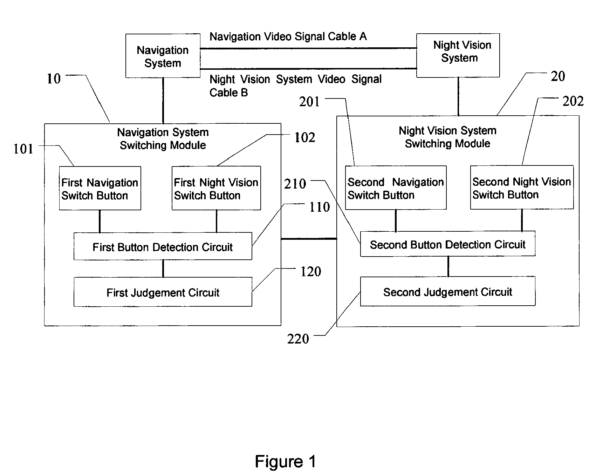

Refer to figure 1, which is a structure schematic diagram on a device for switching between a vehicle navigation system and a night vision system of a preferred embodiment of the present invention. As shown in figure 1, it includes a navigation system switching module 10 and a night vision system switching module 20. The said navigation system switching module 10 connects to a navigation system, applied to control the navigation system starting a navigation mode and displaying the navigation info, or control the navigation system starting a night vision mode, and transmitting the night vision info from a night vision system to the navigation system for displaying, based on the input operation. The said night vision system switching module 20 connects to the night vision system, applied to control the night vision system starting the night vision mode and displaying the night vision info, or control the night vision system starting the navigation mode, and transmitting the navigation info from the navigation system to the night vision system for displaying, based on the input operation.

Wherein, the navigation system connects to the night vision system through a video signal cable, applied to transmit the night vision info to the display screen of the navigation system for displaying, or transmit the navigation info to the screen of the night vision system for displaying. During a specific implementation, the said video signal cable includes a navigation video signal cable A, and a night vision video signal cable B. The said navigation video signal cable A connects a camera of the navigation system, the navigation system and the night vision system together. When the navigation system is in the navigation mode, the navigation video signal collected by the navigation system camera, i.e., the road pictures ahead of the vehicle in the driving direction, taken by the camera, combining with the downloaded map, work together for route navigation. While the night vision system is in the navigation mode, the navigation video signal are transmitted to the night vision system through the navigation video signal cable A. Here, the only purpose of the navigation video signal cable A is transmitting the navigation video signal.

The said night vision video signal cable B connects a camera of the night vision system, the navigation system and the night vision system together. When the night vision system is in the night vision mode, the night vision video signal collected by the camera of the night vision system, i.e., the road pictures ahead of the vehicle in the driving direction under a dark driving condition taken by the camera of the night vision system, which is then transmitted to the display screen of the navigation system for displaying, through the night vision video signal cable B. Where, the only purpose of the night vision video signal cable B is transmitting the night vision video signal.

The said navigation system switching module 10 connects to the night vision system switching module 20 through communication cable. Here, the said communication cable is a 485 cable, applied to transmit corresponding parameters of the night vision system or navigation system, and adjust the working status of the night vision system or navigation system. For example, when the navigation system starts the night vision mode, related parameters (such as exposure, light balance, focal length and so on) of the night vision system will be displayed on the display screen of the navigation system. After configuring these parameters, a corresponding control signal will be output and transmitted to the night vision system switching module 20 through the communication cable, and during the time to input the corresponding control signal to the night vision system, it is able to control the camera of the night vision system to turn around, focus, or, adjust the light effects of the night vision pictures. The adjusted night vision video signal is transmitted to the navigation system for displaying, through the night vision video signal cable B; therefore, it is possible to control the night vision system from the display screen of the navigation system. Similarly, controlling the navigation system from the screen of the night vision system is also achievable.

In the present embodiment, the said navigation system switching module 10 includes a first navigation switch button 101 and a first night vision switch button 102. The said first navigation switch button 101 is configured to control the navigation system starting the navigation mode, while the said first night vision switch button 102 is applied to control the navigation system starting the night vision mode. The said night vision switching mode 20 includes a second navigation switch button 201 and a second night vision switch button 202. The said second navigation switch button 201 is applied to control the night vision system starting the navigation mode, and the second night vision switch button 202 is applied to control the night vision system starting the night vision mode.

Normally, when the navigation system is started, the system will start the navigation mode by default. If the user needs to switch to the night vision mode, then, just press the first night vision switch button 102, then the navigation system vision signal cable A will be shut off, and its connection to the navigation system will be shut down, thus the navigation video signal will be unable to transmit to the display screen of the navigation system for displaying; while the night vision video signal cable B will be connected to the navigation system, and transmitting the night vision video signal to the display screen of the navigation system for displaying. If the user needs to switch it back to the navigation mode, just press the first navigation switch button 101 and achieve the switching, and the navigation system video signal cable A will recover the connection with the navigation system, and shut off the connection of the night vision video signal cable B. Similarly, the working principles of the second navigation switch button 201 and the second night vision switch button 202 can be achieved.

In order to judge which of the above said buttons is pressed, further, the said navigation system switch module 10 also includes a first button detection circuit 110, which connects to the first navigation switch button 101 and the first night vision switch button 102 separately, applied to detect the using status of the first navigation switch button 101 and the first night vision switch button 102, i.e., whether they are pressed. The said night vision system switch module 20 also includes a second button detection circuit 210, which connects to the second navigation switch button 201 and the second night vision switch button 202, applied to detect the using status of the second navigation switch button 201 and the second night vision switch button 202.

When the switch button is pressed, it is also needed to combine the current mode to decide if it is needed to execute the function represented by the specific switch button. Further, the said navigation system switch module 10 also includes a first judgment circuit 120, which connects to the first button detection circuit 110, applied to decide if it is needed to switch the mode, based on the current navigation system mode, when the first navigation switch button 101 or the first night vision switch button 102 is pressed. The said night vision system switch module 20 also includes a second judgment circuit 220, which connects to the second button detection circuit 210, applied to decide if it is needed to switch the mode based on the current night vision system mode, when the second navigation switch button 201 or the second night vision switch button 202 is pressed.

Based on the above said embodiments, the embodiment of the present invention also provides a switching method for the device to switch between the vehicle navigation system and the night vision system.

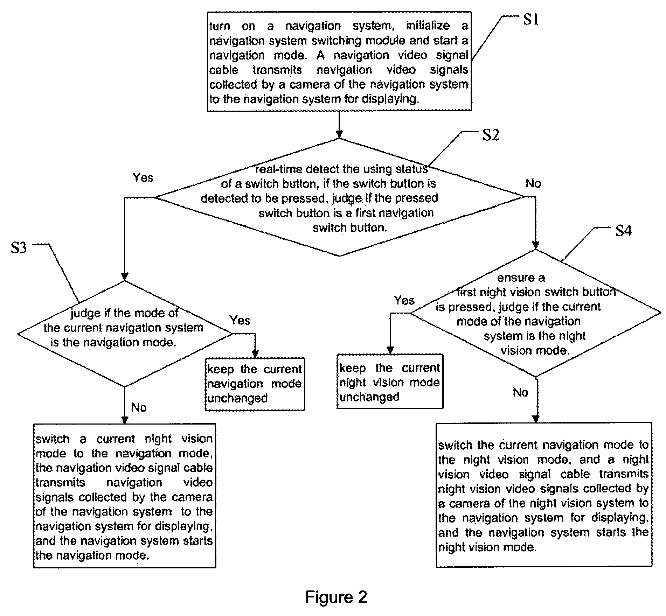

As shown in figure 2, the switching method of the navigation system comprises the following steps:
S1: turn on the navigation system, initialize the navigation system switching module and start the navigation mode. The navigation video signal cable transmits the navigation video signal collected by the camera of the navigation system to the navigation system for displaying;
   When the navigation system is started, the system will start the navigation mode by default.
S2: real-time detect the using status of the switch button, when the switch button is detected to be pressed, judge if the pressed switch button is the first navigation switch button: if so, continue to step S3; otherwise, go to step S4.
   Real-time detect the using status of the switch buttons through the first button detection circuit, i.e., whether there are any switch buttons pressed, and which switch button is pressed.
S3: judge if the mode of current navigation system is the navigation mode: if so, keep the current navigation mode unchanged; otherwise, switch the current night vision mode to the navigation mode, the navigation video signal cable then transmits the navigation video signal collected by the camera of the navigation system to the navigation system for displaying, and the navigation system starts the navigation mode;
S4: ensure the first night vision switch button is pressed, judge if the current mode of the navigation system is the night vision mode: if so, keep the current mode unchanged; otherwise, switch the current navigation mode to the night vision mode, and the night vision video signal cable transmits the night vision video signal collected by the camera of the night vision system to the navigation system for displaying, and the navigation system starts the night vision mode.

The above mentioned step S2 and step S3 mainly point to the switch process when the first navigation switch button is pressed. Judge if it is needed to execute the function of the specific switch button, decided by the first judgment circuit combining the current mode. If the current mode is the navigation mode, then no switching operation is needed; if the current mode is the night vision mode, then pressing the first navigation switch button means switching the night vision mode to the navigation mode.

The above mentioned step S2 and step S4 mainly point to the switching process when the first night vision switch button is pressed. If the current mode is the night vision mode, then no switching operation is needed; if the current mode is the navigation mode, then pressing the first night vision switch button means switching the navigation mode to the night vision mode.

Further, when the navigation system starts the night vision mode, a corresponding parameter of the night vision mode can be configured on the display screen of the navigation system, as well as the working status of the night vision system can be adjusted, that is, adjusting the brightness or light balance of the night vision pictures, as well as the focus, swinging of the camera, and more.

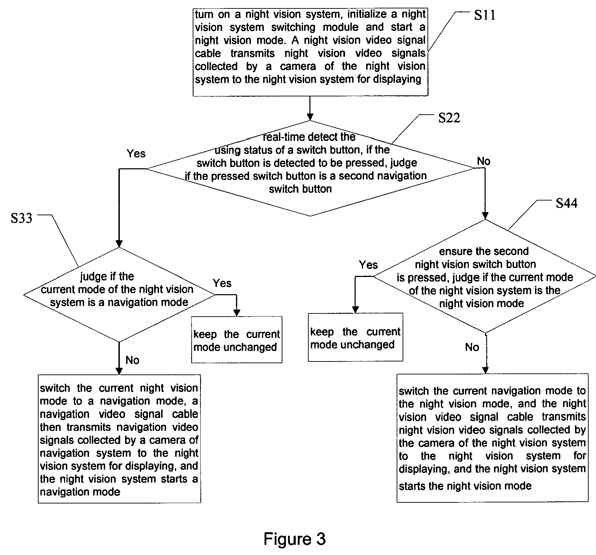

Similarly, the switching method of the night vision system can be achieved, as shown in figure 3, it comprises the following steps:
S11: turn on the night vision system, initialize the night vision system switching module and start the night vision mode. The night vision video signal cable transmits the night vision video signal collected by the camera of the night vision system to the night vision system for displaying;
S22: real-time detect the using status of the switch button, if the switch button is detected to be pressed, judge if the pressed switch button is the second navigation switch button: if so, continue to step S33; otherwise, go to step S44.
   Real-time detect the using status of the switch buttons through the second button detection circuit, i.e., whether there are any switch buttons pressed down, and which switch button is pressed down.
S33: judge if the current mode of the night vision system is the navigation mode: if so, keep the current mode without tranferring; otherwise, switch the current night vision mode to the navigation mode, the navigation video signal cable then transmits the navigation video signal collected by the camera of the navigation system to the night vision system for displaying, the night vision system starts the navigation mode;
S44: ensure the second night vision switch button is pressed, judge if the current mode of the night vision system is the night vision mode: if so, keep the current mode unchanged; otherwise, switch the current navigation mode to the night vision mode, and the night vision video signal cable transmits the night vision video signal collected by the the camera of the night vision system to the night vision system for displaying, and the night vision system starts the night vision mode.

Judge if it is needed to execute the function of the specific switch button, decided by the second judgment circuit combining the current mode. After the above mentioned switching operations, further, when the night vision system starts the navigation mode, a corresponding parameter of the navigation mode can be configured on the display screen of the night vision system, in order to adjust the working status of the navigation system.

It should be understood that, the application of the present invention is not limited to the above examples listed. It will be possible for a person skilled in the art to make modifications or replacements according to the above description. All of these modifications or replacements shall all fall within the scope of the appended claims of the present invention.

## Claims

1. A system comprising a vehicle navigation system, a night vision system, a navigation system switching module (10) and a night vision system switching module (20); wherein
the navigation system and the night vision system are connected through a navigation video signal cable (A) and a night vision video signal cable (B),
wherein
the navigation video signal cable (A) is configured to transmit a navigation video signal from the camera of the navigation system to the navigation system and the night vision system, and the night vision video signal cable (B) is configured to transmit a night vision video signal from the camera of the night vision system to the night vision system and the navigation system;
the navigation system switching module (10) is connected to the navigation system and configured to, based on an input operation, control the navigation system to start a navigation mode and display the navigation video signal on a display screen of the navigation system, or control the navigation system to start a night vision mode and display the night vision video signal transmitted from the night vision system to the navigation system;
the night vision system switching module (20) is connected to the night vision system and configured to, based on the input operation, control the night vision system to start a night vision mode and display the night vision video signal on a display screen of the night vision system, or control the night vision system to start the navigation mode and display the navigation video signal transmitted from the navigation system to the night vision system:
the navigation system switching module (10) is connected to the night vision system switching module (20) through a communication cable, configured to transmit related parameters of the navigation system or the night vision system, and adjust the working status of the night vision system or the navigation system,
wherein when the navigation system starts the night vision mode, it is adapted to display related parameters of the night vision system on the display screen of the navigation system, and allow these parameters to be configured and transmitted to the night vision switching module (20) through the communication cable, thereby allowing the night vision system to be controlled from the display screen of the navigation system; and
wherein when the night vision system starts the navigation mode, it is adapted to display related parameters of the navigation system on the display screen of the night vision system, and allow these parameters to be configured and transmitted to the navigation system switching module (10) through the communication cable, thereby allowing the navigation system to be controlled from the display screen of the night vision system.

2. The system according to claim 1, wherein the said navigation system switching module (10) includes a first navigation switch button (101) and a first night vision switch button (102); while the first navigation switch button (101) is used to control the navigation system to start the navigation mode, and the first night vision switch button (102) is used to control the navigation system to start the night vision mode; and
the night vision system switching module (20) includes a second navigation switch button (201) and a second night vision switch button (202); while the second navigation switch button (201) is used to control the night vision system to start the navigation mode, and the second night vision switch button (202) is used to control the night vision system to start the night vision mode.

3. The system according to claim 2, wherein the navigation system switching module (10) further comprises a first button detection circuit (110); while the first button detection circuit (110) is connected to the first navigation switch button (101) and the first night vision switch button (102) separately, used to detect which of the first navigation switch button (101) and the first night vision switch button (102) is pressed; and
the night vision system switching module (20) further includes a second button detection circuit (210); while the second button detection circuit (210) is connected to the second navigation switch button (201) and the second night vision switch button (202) separately, used to detect which of the second navigation switch button (201) and the second night vision switch button (202) is pressed.

4. The system according to claim 3, wherein the navigation system switching module (10) further includes a first judgment circuit (120); while the first judgment circuit (120) is connected to the first button detection circuit (110), used to decide if a mode switching is needed based on the current navigation system mode, when the first navigation switch button (101) or the first night vision switch button (102) is pressed; and
the night vision system switching module (20) further includes a second judgment circuit (220); while the second judgment circuit (220) is connected to the second button detection circuit (210), used to decide whether a mode switching is needed based on the current night vision system mode, when the second navigation switch button (201) or the second night vision switch button (202) is pressed.

5. A method for switching a navigation system between a navigation mode and a night vision mode, comprising the following steps:
A. turning on the navigation system, initializing a navigation system switching module (10) and starting a navigation mode; displaying a navigation video signal collected by a camera of the navigation system on a display screen of the navigation system, wherein the navigation video signal is transmitted to the navigation system through a navigation video signal cable;
B. real-timely detecting the using status of a switch button, if the switch button is detected to be pressed, judging if the pressed switch button is a first navigation switch button (101): if so, continuing to step C; otherwise, going to step D;
C. judging if the mode of current navigation system is the navigation mode: if so, keeping the current navigation mode unchanged; otherwise, switching a current night vision mode to the navigation mode, displaying the navigation video signal collected by the camera of the navigation system, wherein the navigation video signal is transmitted through the navigation video signal cable to the navigation system, and the navigation system starting the navigation mode; and
D. ensuring a first night vision switch button (102) is pressed, judging if the current mode of the navigation system is the night vision mode: if so, keeping the current night vision mode unchanged; otherwise, switching the current navigation mode to the night vision mode, and displaying a night vision video signal collected by a camera of the night vision system, wherein the night vision video signal is transmitted through a night vision video signal cable to the navigation system, and the navigation system starting the night vision mode.

6. The switching method according to claim 5, comprising: when the navigation system starts the night vision mode, related parameters of the night vision system are displayed on the display screen of the navigation system, allowing these parameters to be configured and transmitted to a night vision switching module (20) through a communication cable, thereby allowing the night vision system to be controlled from the display screen of the navigation system.

7. A method for a switching a night vision system between a navigation mode and a night vision mode, comprising the following steps:
a. turning on the night vision system, initializing a night vision system switching module (20) and starting a night vision mode; displaying a night vision video signal collected by a camera of the night vision system on a display screen of the night vision system, wherein the night vision video signal is transmitted through a night vision video signal cable to the night vision system;
b. real-timely detecting the using status of a switch button, if the switch button is detected to be pressed, judging if the pressed switch button is a second navigation switch button (201): if so, continuing to step c; otherwise, going to step d;
c. judging if the current mode of the night vision system is a navigation mode: if so, keeping the current mode unchanged; otherwise, switching the current night vision mode to the navigation mode, displaying a navigation video signal collected by a camera of navigation system, wherein the navigation video signal is transmitted through a navigation video signal cable to the night vision system, and the night vision system starting the navigation mode; and
d. ensuring the second night vision switch button (202) is pressed, judging if the current mode of the night vision system is the night vision mode: if so, keeping the current mode unchanged; otherwise, switching the current navigation mode to the night vision mode, and displaying the night vision video signal collected by the camera of the night vision system, wherein the night vision video signal is transmitted through the night vision video signal cable to the night vision system, and the night vision system starting the night vision mode.

8. The switching method according to claim 7, comprising: when the night vision system starts the navigation mode, related parameters of the navigation system are displayed on the display screen of the night vision system, allowing these parameters to be configured and transmitted to the navigation system switching module (10) through the communication cable, thereby allowing the navigation system to be controlled from the display screen of the night vision system.

## Patentansprüche

1. System, das ein Fahrzeugnavigationssystem, ein Nachtsichtsystem, ein Navigationssystem-Schaltmodul (10) und ein Nachtsichtsystem-Schaltmodul (20) umfasst; wobei
das Navigationssystem und das Nachtsichtsystem durch ein Navigations-Videosignalkabel (A) und ein Nachtsicht-Videosignalkabel (B) verbunden sind, wobei
das Navigations-Videosignalkabel (A) ausgestaltet ist, um ein Navigationsvideosignal von der Kamera des Navigationssystems an das Navigationssystem und an das Nachtsichtsystem zu übertragen, und das Nachtsicht-Videosignalkabel (B) ausgestaltet ist, um ein Nachtsichtvideosignal von der Kamera des Nachtsichtsystems an das Nachtsichtsystem und an das Navigationssystem zu übertragen; wobei das Navigationssystem-Schaltmodul (10) mit dem Navigationssystem verbunden ist und ausgestaltet ist, um auf der Grundlage einer Eingabeoperation das Navigationssystem zum Starten eines Navigationsmodus und zum Anzeigen des Navigationsvideosignals an einem Anzeigebildschirm des Navigationssystems zu steuern, oder um das Navigationssystem zum Starten eines Nachtsichtmodus und zum Anzeigen des Nachtsichtvideosignals, das von dem Nachtsichtsystem an das Navigationssystem übertragen wird, zu steuern;
wobei das Nachtsichtsystem-Schaltmodul (20) mit dem Nachtsichtsystem verbunden ist und ausgestaltet ist, um auf der Grundlage der Eingabeoperation das Nachtsichtsystem zum Starten eines Nachtsichtmodus und zum Anzeigen des Nachtsichtvideosignals an einem Anzeigebildschirm des Nachtsichtsystems zu steuern, oder um das Nachtsichtsystem zum Starten des Navigationsmodus und zum Anzeigen des Navigationsvideosignals, das von dem Navigationssystem an das Nachtsichtsystem übertragen wird, zu steuern;
wobei das Navigationssystem-Schaltmodul (10) mit dem Nachtsichtsystem-Schaltmodul (20) durch ein Kommunikationskabel verbunden ist, das ausgestaltet ist, um zugehörige Parameter des Navigationssystems oder des Nachtsichtsystems zu übertragen und um den Arbeitsstatus des Nachtsichtsystems oder des Navigationssystems zu justieren,
wobei das Navigationssystem ausgelegt ist, um, wenn es den Nachtsichtmodus startet, zugehörige Parameter des Nachtsichtsystems an dem Anzeigebildschirm des Navigationssystems anzuzeigen und um zu ermöglichen, dass diese Parameter konfiguriert und durch das Kommunikationskabel an das Nachtsicht-Schaltmodul (20) übertragen werden, wodurch ermöglicht wird, dass das Nachtsichtsystem von dem Anzeigebildschirm des Navigationssystems aus gesteuert wird; und
wobei das Nachtsichtsystem ausgelegt ist, um, wenn es den Navigationsmodus startet, zugehörige Parameter des Navigationssystems an dem Anzeigebildschirm des Nachtsichtsystems anzuzeigen und um zu ermöglichen, dass diese Parameter konfiguriert und durch das Kommunikationskabel an das Navigationssystem-Schaltmodul (10) übertragen werden, wodurch ermöglicht wird, dass das Navigationssystem von dem Anzeigebildschirm des Nachtsichtsystems aus gesteuert wird.

2. System nach Anspruch 1,
wobei das Navigationssystem-Schaltmodul (10) einen ersten Navigationsschaltknopf (101) und einen ersten Nachtsichtschaltknopf (102) enthält; wobei der erste Navigationsschaltknopf (101) verwendet wird, um das Navigationssystem zum Starten des Navigationsmodus zu steuern, und der erste Nachtsichtschaltknopf (102) verwendet wird, um das Navigationssystem zum Starten des Nachtsichtmodus zu steuern; und
wobei das Nachtsichtsystem-Schaltmodul (20) einen zweiten Navigationsschaltknopf (201) und einen zweiten Nachtsichtschaltknopf (202) enthält; wobei der zweite Navigationsschaltknopf (201) verwendet wird, um das Nachtsichtsystem zum Starten des Navigationsmodus zu steuern und der zweite Nachtsichtschaltknopf (202) verwendet wird, um das Nachtsichtsystem zum Starten des Nachtsichtmodus zu steuern.

3. System nach Anspruch 2,
wobei das Navigationssystem-Schaltmodul (10) ferner eine erste Knopfdetektionsschaltung (110) umfasst; wobei die erste Knopfdetektionsschaltung (110) mit dem ersten Navigationsschaltknopf (101) und dem ersten Nachtsichtschaltknopf (102) separat verbunden ist und verwendet wird, um zu detektieren, welcher von dem ersten Navigationsschaltknopf (101) und dem ersten Nachtsichtschaltknopf (102) gedrückt wird; und
wobei das Nachtsichtsystem-Schaltmodul (20) ferner eine zweite Knopfdetektionsschaltung (210) umfasst; wobei die zweite Knopfdetektionsschaltung (210) mit dem zweiten Navigationsschaltknopf (201) und dem zweiten Nachtsichtschaltknopf (202) separat verbunden ist und verwendet wird, um zu detektieren, welcher von dem zweiten Navigationsschaltknopf (201) und dem zweiten Nachtsichtschaltknopf (202) gedrückt wird.

4. System nach Anspruch 3,
wobei das Navigationssystem-Schaltmodul (10) ferner eine erste Beurteilungsschaltung (120) enthält; wobei die erste Beurteilungsschaltung (120) mit der ersten Knopfdetektionsschaltung (110) verbunden ist und verwendet wird, um auf der Grundlage des aktuellen Navigationssystemmodus, wenn der erste Navigationsschaltknopf (101) oder der erste Nachtsichtschaltknopf (102) gedrückt wird, zu entscheiden, ob ein Modusumschalten benötigt wird; und
wobei das Nachtsichtsystem-Schaltmodul (20) ferner eine zweite Beurteilungsschaltung (220) enthält; wobei die zweite Beurteilungsschaltung (220) mit der zweiten Knopfdetektionsschaltung (210) verbunden ist und verwendet wird, um auf der Grundlage des aktuellen Nachtsichtsystemmodus, wenn der zweite Navigationsschaltknopf (201) oder der zweite Nachtsichtschaltknopf (202) gedrückt wird, zu entscheiden, ob ein Modusumschalten benötigt wird.

5. Verfahren zum Umschalten eines Navigationssystems zwischen einem Navigationsmodus und einem Nachtsichtmodus, wobei das Verfahren die folgenden Schritte umfasst, dass:
A. das Navigationssystem eingeschaltet wird, ein Navigationssystem-Schaltmodul (10) initialisiert wird und ein Navigationsmodus gestartet wird; ein Navigationsvideosignal, das von einer Kamera des Navigationssystems aufgenommen wird, an einem Anzeigebildschirm des Navigationssystems angezeigt wird, wobei das Navigationsvideosignal durch ein Navigations-Videosignalkabel an das Navigationssystem übertragen wird;
B. der Verwendungsstatus eines Schaltknopfs in Echtzeit detektiert wird, und wenn detektiert wird, dass der Schaltknopf gedrückt wird, beurteilt wird, ob der gedrückte Schaltknopf ein erster Navigationsschaltknopf (101) ist: wenn dies zutrifft, wird mit Schritt C fortgefahren; andernfalls wird zu Schritt D gesprungen;
C. beurteilt wird, ob der aktuelle Modus des Navigationssystems der Navigationsmodus ist: wenn dies zutrifft, wird der aktuelle Navigationsmodus unverändert gelassen; andernfalls wird ein aktueller Nachtsichtmodus in den Navigationsmodus umgeschaltet, das Navigationsvideosignal, das von der Kamera des Navigationssystems aufgenommen wird, wird angezeigt, wobei das Navigationsvideosignal durch das Navigations-Videosignalkabel an das Navigationssystem übertragen wird und das Navigationssystem den Navigationsmodus startet; und
D. sichergestellt wird, dass ein erster Nachtsichtschaltknopf (102) gedrückt wird, beurteilt wird, ob der aktuelle Modus des Navigationssystems der Nachtsichtmodus ist: wenn dies zutrifft, wird der aktuelle Nachtsichtmodus unverändert gelassen; andernfalls wird der aktuelle Navigationsmodus in den Nachtsichtmodus umgeschaltet und ein Nachtsichtvideosignal, das von einer Kamera des Nachtsichtsystems aufgenommen wird, wird angezeigt, wobei das Nachtsichtvideosignal durch ein Nachtsicht-Videosignalkabel an das Navigationssystem übertragen wird und das Navigationssystem den Nachtsichtmodus startet.

6. Umschaltverfahren nach Anspruch 5, das umfasst, dass:
wenn das Navigationssystem den Nachtsichtmodus startet, zugehörige Parameter des Nachtsichtsystems an dem Anzeigebildschirm des Navigationssystems angezeigt werden, und ermöglicht wird, dass diese Parameter konfiguriert und durch ein Kommunikationskabel an ein Nachtsicht-Schaltmodul (20) übertragen werden, wodurch ermöglicht wird, dass das Nachtsichtsystem von dem Anzeigebildschirm des Navigationssystems aus gesteuert wird.

7. Verfahren zum Umschalten eines Nachtsichtsystems zwischen einem Navigationsmodus und einem Nachtsichtmodus, wobei das Verfahren die folgenden Schritte umfasst, dass:
a. das Nachtsichtsystem eingeschaltet wird, ein Nachtsichtsystem-Schaltmodul (20) initialisiert wird und ein Nachtsichtmodus gestartet wird; ein Nachtsichtvideosignal, das von einer Kamera des Nachtsichtsystems aufgenommen wird, an einem Anzeigebildschirm des Nachtsichtsystems angezeigt wird, wobei das Nachtsichtvideosignal durch ein Nachtsicht-Videosignalkabel an das Nachtsichtsystem übertragen wird;
b. der Verwendungsstatus eines Schaltknopfs in Echtzeit detektiert wird, und wenn detektiert wird, dass der Schaltknopf gedrückt wird, beurteilt wird, ob der gedrückte Schaltknopf ein zweiter Navigationsschaltknopf (201) ist: wenn dies zutrifft, wird mit Schritt c fortgefahren; andernfalls wird zu Schritt d gesprungen;
c. beurteilt wird, ob der aktuelle Modus des Nachtsichtsystems ein Navigationsmodus ist; wenn dies zutrifft, wird der aktuelle Modus unverändert gelassen; andernfalls wird der aktuelle Nachtsichtmodus in den Navigationsmodus umgeschaltet, ein Navigationsvideosignal, das von einer Kamera des Navigationssystems aufgenommen wird, wird angezeigt, wobei das Navigationsvideosignal durch ein Navigations-Videosignalkabel an das Nachtsichtsystem übertragen wird und das Nachtsichtsystem den Navigationsmodus startet; und
d. sichergestellt wird, dass der zweite Nachtsichtschaltknopf (202) gedrückt wird, beurteilt wird, ob der aktuelle Modus des Nachtsichtsystems der Nachtsichtmodus ist: wenn dies zutrifft, wird der aktuelle Modus unverändert gelassen; andernfalls wird der aktuelle Navigationsmodus in den Nachtsichtmodus umgeschaltet und das Nachtsichtvideosignal, das von der Kamera des Nachtsichtsystems aufgenommen wird, wird angezeigt, wobei das Nachtsichtvideosignal durch das Nachtsicht-Videosignalkabel an das Nachtsichtsystem übertragen wird und das Nachtsichtsystem den Nachtsichtmodus startet.

8. Umschaltverfahren nach Anspruch 7, das umfasst, dass:
wenn das Nachtsichtsystem den Navigationsmodus startet, zugehörige Parameter des Navigationssystems an dem Anzeigebildschirm des Nachtsichtsystems angezeigt werden, und ermöglicht wird, dass diese Parameter konfiguriert und durch das Kommunikationskabel an das Navigationssystem-Schaltmodul (10) übertragen werden, wodurch ermöglicht wird, dass das Navigationssystem von dem Anzeigebildschirm des Nachtsichtsystems aus gesteuert wird.

## Revendications

1. Système comprenant un système de navigation pour véhicule, un système de vision nocturne, un module de commutation de système de navigation (10) et un module de commutation de système de vision nocturne (20), dans lequel
le système de navigation et le système de vision nocturne sont connectés via un câble pour signal vidéo de navigation (A) et un câble pour signal vidéo de vision nocturne (B),
dans lequel
le câble pour signal vidéo de navigation (A) est configuré pour transmettre un signal vidéo de navigation depuis la caméra du système de navigation au système de navigation et au système de vision nocturne, et le câble pour signal vidéo de vision nocturne (B) est configuré pour transmettre un signal vidéo de vision nocturne depuis la caméra du système de vision nocturne au système de vision nocturne et au système de navigation ;
le module de commutation de système de navigation (10) est connecté au système de navigation et est configuré, en se basant sur une opération d'entrée, pour commander le système de navigation pour commencer un mode de navigation et afficher le signal vidéo de navigation sur un écran d'affichage du système de navigation, ou pour commander le système de navigation pour commencer un mode de vision nocturne et afficher le signal vidéo de vision nocturne transmis depuis le système de vision nocturne au système de navigation ;
le module de commutation de système de vision nocturne (20) est connecté au système de vision nocturne et est configuré, en se basant sur une opération d'entrée, pour commander le système de vision nocturne pour commencer un mode de vision nocturne et afficher le signal vidéo de vision nocturne sur un écran d'affichage du système de vision nocturne, ou pour commander le système de vision nocturne pour commencer le mode de navigation et afficher le signal vidéo de navigation transmis depuis le système de navigation au système de vision nocturne ;
le module de commutation de système de navigation (10) est connecté au module de commutation de système de vision nocturne (20) via un câble de communication, configuré pour transmettre des paramètres en relation du système de navigation ou du système de vision nocturne, et ajuster l'état de fonctionnement du système de vision nocturne ou du système de navigation,
dans lequel quand le système de navigation commence le mode de vision nocturne, il est adapté à afficher des paramètres en relation du système de vision nocturne sur l'écran d'affichage du système de navigation, et permettre que ces paramètres soient configurés et transmis au module de commutation de vision nocturne (20) via le câble de communication, en permettant ainsi au système de vision nocturne d'être commandé depuis l'écran d'affichage du système de navigation ; et
quand le système de vision nocturne commence le mode de navigation, il est adapté à afficher des paramètres en relation du système de navigation sur l'écran d'affichage du système de vision nocturne, et permettre que ces paramètres soient configurés et transmis au module de commutation de système de navigation (10) via le câble de communication, en permettant ainsi au système de navigation d'être commandé depuis l'écran d'affichage du système de vision nocturne.

2. Système selon la revendication 1, dans lequel ledit module de commutation de système de navigation (10) inclut un premier bouton de commutation de navigation (101) et un premier bouton de commutation de vision nocturne (102), tels que le premier bouton de commutation de navigation (101) est utilisé pour commander le système de navigation pour commencer le mode de navigation, et que le premier bouton de commutation de vision nocturne (102) est utilisé pour commander le système de navigation pour commencer le mode de vision nocturne ; et
le module de commutation de système de vision nocturne (20) inclut un second bouton de commutation de navigation (201) et un second bouton de commutation de vision nocturne (202), tels que le second bouton de commutation de navigation (201) est utilisé pour commander le système de vision nocturne pour commencer le mode de navigation, et que le second bouton de commutation de vision nocturne (202) est utilisé pour commander le système de vision nocturne pour commencer le mode de vision nocturne.

3. Système selon la revendication 2, dans lequel le module de commutation de système de navigation (10) comprend en outre un circuit de détection de premier bouton (110), tel que le circuit de détection de premier bouton (110) est connecté au premier bouton de commutation de navigation (101) et au premier bouton de commutation de vision nocturne (102) séparément, utilisé pour détecter lequel du premier bouton de commutation de navigation (101) et du premier bouton de commutation de vision nocturne (102) est enfoncé ; et
le module de commutation de système de vision nocturne (20) inclut en outre un circuit de détection de second bouton (210), tel que le circuit de détection de second bouton (210) est connecté au second bouton de commutation de navigation (201) et au second bouton de commutation de vision nocturne (202) séparément, utilisé pour détecter lequel du second bouton de commutation de navigation (201) et du second bouton de commutation de vision nocturne (202) est enfoncé.

4. Système selon la revendication 3, dans lequel le module de commutation de système de navigation (10) inclut en outre un premier circuit de jugement (120), tel que le premier circuit de jugement (120) est connecté au circuit de détection de premier bouton (110), utilisé pour décider si une commutation de mode est nécessaire sur la base du mode actuel du système de navigation, quand le premier bouton de commutation de navigation (101) ou le premier bouton de commutation de vision nocturne (102) est enfoncé ; et
le module de commutation de système de vision nocturne (20) inclut en outre un second circuit de jugement (220), tel que le second circuit de jugement (220) est connecté au circuit de détection de second bouton (210), utilisé pour décider si une commutation de mode est nécessaire sur la base du mode actuel du système de vision nocturne, quand le second bouton de commutation de navigation (201) ou le second bouton de commutation de vision nocturne (202) est enfoncé.

5. Procédé pour commuter un système de navigation entre un mode de navigation et un mode de vision nocturne, comprenant les étapes suivantes :
A) on met en marche le système de navigation, on initialise un module de commutation de système de navigation (10) est on commence un mode de navigation ; on affiche un signal vidéo de navigation recueilli par une caméra du système de navigation, sur un écran d'affichage du système de navigation, tel que le signal vidéo de navigation est transmis au système de navigation via un câble pour signal vidéo de navigation ;
B) on détecte en temps réel l'état d'utilisation d'un bouton de commutation ; si l'on détecte que le bouton de commutation est enfoncé, on juge si le bouton de commutation enfoncé est un premier bouton de commutation de navigation (101) ; si oui, on continue à l'étape C ; sinon, on passe à l'étape D ;
C) on juge si le mode actuel du système de navigation est le mode de navigation ; si oui, on maintient le mode de navigation actuel sans changement ; sinon, on commute un mode actuel de vision nocturne vers le mode de navigation, on affiche le signal vidéo de navigation recueilli par la caméra du système de navigation, tel que le signal vidéo de navigation est transmis via le câble pour signal vidéo de navigation au système de navigation, et le système de navigation commence le mode de navigation ; et
D) on s'assure qu'un premier bouton de commutation de vision nocturne (102) est enfoncé, on juge si le mode actuel du système de navigation est le mode de vision nocturne, si oui, on maintient le mode actuel de vision nocturne sans changement ; sinon, on commute le mode actuel de navigation vers le mode de vision nocturne, et on affiche un signal vidéo de vision nocturne recueilli par une caméra du système de vision nocturne, tel que le signal vidéo de vision nocturne est transmis via un câble pour signal vidéo de vision nocturne au système de navigation, et le système de navigation commence le mode de vision nocturne.

6. Procédé de commutation selon la revendication 5, comprenant : quand le système de navigation commence le mode de vision nocturne, l'opération consistant à afficher des paramètres en relation du système de vision nocturne sur l'écran d'affichage du système de navigation, à permettre que ces paramètres soient configurés et transmis à un module de commutation de vision nocturne (20) via un câble de communication, permettant ainsi au système de vision nocturne d'être commandé depuis l'écran d'affichage du système de navigation.

7. Procédé pour commuter un système de vision nocturne entre un mode de navigation et un mode de vision nocturne, comprenant les étapes suivantes :
a) on met en marche le système de vision nocturne, on initialise un module de commutation de système de vision nocturne (20) et on commence un mode de vision nocturne ; on affiche un signal vidéo de vision nocturne recueilli par une caméra du système de vision nocturne sur un écran d'affichage du système de vision nocturne, tel que le signal vidéo de vision nocturne est transmis via un câble pour signal vidéo de vision nocturne au système de vision nocturne ;
b) on détecte en temps réel l'état d'utilisation d'un bouton de commutation, si l'on détecte que le bouton de commutation est enfoncé, on juge si le bouton de commutation enfoncé est un second bouton de commutation de navigation (201), si oui, on continue à l'étape c ; sinon, on passe à l'étape d ;
c) on juge si le mode actuel du système de vision nocturne est un mode de navigation ; si oui, on maintient le mode actuel sans changement, sinon, on commute le mode actuel de vision nocturne vers le mode de navigation, on affiche un signal vidéo de navigation recueilli par une caméra du système de navigation, tel que le signal vidéo de navigation est transmis via un câble pour signal vidéo de navigation vers le système de vision nocturne, et le système de vision nocturne commence le mode de navigation ; et
d) on s'assure que le second bouton de commutation de vision nocturne (202) est enfoncé, on juge si le mode actuel du système de vision nocturne est le mode de vision nocturne, si oui, on maintient le mode actuel sans changement, sinon, on commute le mode de navigation actuel vers le mode de vision nocturne, et on affiche le signal vidéo de vision nocturne recueilli par la caméra du système de vision nocturne; tel que le signal vidéo de vision nocturne est transmis via le câble pour signal vidéo de vision nocturne au système de vision nocturne, et le système de vision nocturne commence le mode de vision nocturne.

8. Procédé de commutation selon la revendication 7, comprenant : quand le système de vision nocturne commence le mode de navigation, l'opération consistant à afficher des paramètres en relation du système de navigation sur l'écran d'affichage du système de vision nocturne, à permettre que ces paramètres soient configurés et transmis au module de commutation de système de navigation (10) via le câble de communication, permettant ainsi au système de navigation d'être commandé depuis l'écran d'affichage du système de vision nocturne.
